# EUROPÄISCHE PATENTSCHRIFT

(11) **EP 4 210 984 B1**
(45) Veröffentlichungstag und Bekanntmachung des Hinweises auf die Patenterteilung: **16.10.2024**
(21) Anmeldenummer: 21823486.2
(22) Anmeldetag: 26.11.2021
(51) Int. Cl.: B60K 11/08, F01P 7/10

(54) **LUFTFÜHRUNGSSTEUERUNG**
AIR GUIDING CONTROL
COMMANDE DE GUIDAGE D'AIR

(30) Priorität: 27.11.2020 DE 102020131530; 18.03.2021 DE 202021101381 U
(43) Veröffentlichungstag der Anmeldung: 19.07.2023
(73) Patentinhaber: Montaplast Gesellschaft mit beschränkter Haftung, 51597 Morsbach (DE)
(72) Erfinder: MÜLLER, Johannes, 51545 Waldbröl (DE)
(74) Vertreter: Bobzien, Hans Christoph
(86) Internationale Anmeldenummer: PCT/EP2021/083099
(87) Internationale Veröffentlichungsnummer: WO 2022/112471

(56) Entgegenhaltungen:
- DE-A1- 102016 224 846
- DE-A1- 102018 131 448
- US-A- 4 753 288

## Beschreibung

Abstrakt betrifft die Erfindung eine Vorrichtung für das Thermo-Management eines KFZ-Aggregats, das in einer Strömungsrichtung hinter einer durch eine Klappenanordnung verschließbare Luftöffnung angeordnet ist, wobei die Klappenanordnung einen durch einen Fahrtwind erzeugten Luftstrom steuert, indem die Klappenanordnung die Luftöffnung selektiv öffnet und verschließt.

Konkret betrifft die Erfindung eine Luftführungssteuerung, die in eine Luftöffnung zur Steuerung von entlang einer Luftströmungsrichtung L einströmender Luft einsetzbar ist oder diese bildet, mit einer Klappenanordnung umfassend mehrere in die Luftöffnung angeordnete, jalousieartig im Verhältnis zueinander angeordnete Klappen. Jede Klappe weist eine sich entlang einer Klappenlängsachse erstreckende Klappendrehachse und eine sich quer zu dieser Klappendrehachse erstreckende Klappenfläche auf. Jede Klappenfläche ist begrenzt durch sich parallel zur Klappendrehachse erstreckende Klappenlängsseiten und quer zur Klappendrehachse ersteckende Klappenstirnseiten. Üblicherweise sind die Klappenlängsseiten um ein Mehrfaches länger als die Klappenquerseiten, so dass die Klappenfläche eine rechteckige Gestalt aufweist.

Die Klappen sind mit zueinander beabstandeten, parallel erstreckenden Klappendrehachsen zur Bildung der Klappenanordnung drehbar mit einem die Klappenanordnung aufnehmenden oder haltenden Fügepartner verbindbar, wobei jede Klappe der Klappenanordnung mittels einer Verstellvorrichtung verstellbar ist zwischen einer die Luftöffnung freigebenden Öffnungsstellung und einer die Luftöffnung zumindest teilweise verschließenden Schließstellung zur selektiven Freigabe und zum Verschließen der Luftöffnung zur Realisierung eines Thermo-Managements des in Luftströmungsrichtung L der Luftöffnung nachgelagerten KFZ-Aggregats, wie z.B. einem Verbrennungsmotor, einer Bremse, aber auch elektronischen oder elektrischen Bauteilen.

Die Antriebseinheit dreht die Klappen der Klappenanordnung um ihre jeweiligen, beabstandet zueinander angeordneten Klappendrehachsen. Diese Antriebseinheit, häufig auch als "Aktuator" bezeichnet, ist vorzugsweise ausgebildet als Elektromotor.

Die Luftöffnung kann also wahlweise in Abhängigkeit von der Motorleistung und/oder Motortemperatur durch die Klappenanordnung geöffnet und verschlossen werden, indem sich die Klappen um ihre jeweilige Klappendrehachse um verschiedene Drehwinkel herum zwischen der geöffneten Öffnungsstellung und der geschlossenen Schließstellung drehen. Geschlossen wird die Luftführungsteuerung z.B. für die schnellere Erwärmung des Motors in der Startphase und geöffnet wird die Luftzuführungsteuerung unter Volllast zur besseren Kühlung des Motors.

Die Klappenanordnung umfasst mehrere, drehbar über- oder nebeneinander in dem diese aufnehmenden Fügepartner, insbesondere Rahmen, angeordnete Klappen mit einer sich quer zur Fahrtrichtung ersteckenden Klappenlängsachse. Die Klappen der Klappenanordnung können so aus der geschlossenen Schließstellung, in welcher sich die Klappenflächen im Wesentlichen quer zur Fahrtrichtung erstrecken in eine Öffnungsstellung um ihre jeweilige Klappenlängsachse gedreht werden, in welcher sich die Klappenfläche ganz oder teilweise parallel zur Fahrtrichtung erstreckt.

Schließlich ist jede Klappe der Klappenanordnung an einer Klappenstirnseite als Antriebsende ausgebildet, wozu jede Klappe an dieser Klappenstirnseite einen auf die Klappendrehachse wirkenden Hebelarm aufweist, der mit einer Koppelstange drehbar verbindbar ist.

Eine gattungsgemäße Klappenanordnung ist bekannt aus DE 10 2016 224 846 A1.

Weiterer Stand der Technik ist bekannt aus DE 10 2018 131 448 A1, US 4 753 288 A sowie EP 2 855 185 B1.

### Nachteile am Stand der Technik

Gesetzliche Bestimmungen erfordern zunehmend die Überprüfbarkeit und Anzeige von Defekten bei technischen Vorrichtungen in Kraftfahrzeugen. Bei Kraftfahrzeugen wird dieses häufig unter dem Begriff On-Board-Diagnose ("OBD") zusammengefasst. Dabei handelt es sich um ein Fahrzeugdiagnosesystem, dass während des Fahrbetriebes alle abgasbeeinflussenden Systeme überwacht, zusätzlich sind weitere wichtige Steuergeräte vorgesehen, deren Daten durch ihre Software zugänglich sind. Auftretende Fehler werden dem Fahrer über eine Kontrollleuchte angezeigt und im jeweiligen Steuergerät dauerhaft gespeichert. Fehlermeldungen können dann später durch eine Fachwerkstatt über genormte Schnittstellen abgefragt werden.

Eine Luftzuführungssteuerung muss folglich in dieses Diagnosesystem einbezogen werden. Die bisherigen Lösungen sehen bei jalousieartig, mit parallel zueinander sich erstreckenden Klappendrehachsen das Erfassen eines Klappendefekts, insbesondere eines Klappenbruchs auf zwei Weisen. Zum einen direkt an der von dem Aktuator angetriebenen Klappe (Antriebsklappe), wobei der Aktuator das Fehlen der Antriebsklappe daran erkennt, dass diese einen vordefinierten Drehwinkel überschreitet. Die andere Lösung sieht einen Anschlag für die Klappen in der Öffnungsstellung vor, wobei der Aktuator auch hierbei das Fehlen einer Klappe daran erkennt, dass ein diesem Anschlag zugeordneter Drehwinkel überschritten wird.

Problematisch ist bei bestehenden Luftsteuerungen der Bruch einer Klappe innerhalb eines Klappensystems, weil die Klappenanordnungen die Endschalter bislang an den jeweils äußeren Klappen eine Klappenanordnung angeordnet sind, also nur an der jeweils äußeren Klappe der Klappenanordnung. Dieses ist bei dem Bruch einer "inneren" Klappe nicht ausreichend, weil dieser Defekt nicht erkannt wird.

Bricht eine innere Klappe in der Öffnungsstellung, dann kann der Aktuator die Klappenanordnung nicht mehr in die Schließstellung fahren.

### Aufgabe

Aufgabe der Erfindung ist es, die Nachteile aus dem Stand der Technik zumindest teilweise zu vermeiden und insbesondere eine kostengünstige und verlässliche Luftführungssteuerung vorzusehen.

Insbesondere soll eine zuverlässige Fehlererfassung auch bei "inneren" Klappen bei Klappenanordnungen mit mehr als zwei Klappen zuverlässig realisiert werden können.

### Erfindung

Die Erfindung löst diese Aufgabe durch die Merkmale des unabhängigen Anspruchs 1. Vorteilhafte, aber nicht zwingende Merkmale sind in den Unteransprüchen wiedergegeben. Ein zugehöriges Kühlergitter ist in Anspruch 15 angegeben.

Die erfindungsgemäße Luftführungssteuerung ist abstrakt gesprochen so ausgebildet, dass die gesamte Klappenanordnung, also das durch dieses gebildete kinematische System, bei einem Defekt von mindestens einer Klappe an dem Arretierende durch die Feder in der Bewegung arretierbar ist.

Eine solche Luftführungssteuerung angeordnet in oder hinter dem Kühlergitter eines Kraftfahrzeugs wird mitunter auch als "Active Grill Shutter" bezeichnet, weil diese am Vorderende eines Kraftfahrzeugs unmittelbar hinter oder integriert in einen Kühlergrill oder Kühlergitter eines Kraftfahrzeugs angeordnet ist. Das Konzept ist aber nicht nur auf das Thermo-Management eines Verbrennungsmotos verwendbar, sondern auch für Bremsen, elektrische Aggregate und andere KFZ-Aggregate oder Baugruppen, die eines geregelten Thermo-Managements bedürfen.

Das Konzept zum Erkennen von mindestens einer fehlenden Klappe einer Klappenanordnung oder eines Klappensystems mit mehr als zwei Klappen, die insbesondere mindestens eine "innere" Klappe aufweist, umfasst eine Feder, die so ausgebildet ist, dass beim Überfahren einer referenzierten Position, vorzugsweise offenen Position die verbleibenden Klappen oder die Koppelstange von einem Federabschnitt, insbesondere einer Federzunge der Feder blockiert werden/wird, so dass der Aktuator an einer Weiterfahrt gehindert wird, die gesamte Klappenanordnung also blockiert ist. Diese Blockade detektiert der Aktuator durch seine OBD Funktion und meldet einen Fehler an das Steuergerät. Die verbleibenden Klappen der Klappenanordnung werden durch die Feder somit gehindert, in die geschlossene Position weiter zu fahren. Damit ist immer gewährleitet, dass die in Strömungsrichtung hinter der Klappenanordnung liegenden Aggregate jederzeit mit genug Frischluft versorgt werden können, dieses wird im Sinne der Erfindung als "Fail Safe - Position" bezeichnet, also einer zumindest teilweise geöffneten Stellung der Klappenanordnung.

Die Klappenanordnung ist vorzugsweise so ausgebildet, dass die Feder durch die Klappen in einer vorgespannten Auslenkstellung gehalten wird und bei einem Klappenbruch von mindestens einer Klappe aus dieser vorgespannten Auslenkstellung austritt und die Klappenanordnung gegen eine weitere Bewegung arretiert.

Insbesondere wird diese Aufgabe also dadurch gelöst, dass jede Klappe der Klappenanordnung an einer Klappenstirnseite als Arretierende ausgebildet ist. Dazu weist die Klappenanordnung an dem Arretierende mindestens eine Feder auf, die zwischen den Klappen und dem Fügepartner angeordnet ist und mit einem federnden Federende unter Auslenkung durch die Klappen zwischen dem Fügepartner und mindestens einer der Klappen angeordnet ist oder sitzt, so dass diese bei einem Klappenbruch von mindestens einer Klappe der Klappenanordnung eine Arretierung der Klappenanordnung bewirkt, indem das Federende aus der vorgespannten Lage ausfedert und die gesamte Klappenanordnung, also das dadurch definierte kinematische System, gegen eine weitere Bewegung arretiert. Erfindungsgemäß muss die Feder also nur ein Federende aufweisen.

Durch diese Ausgestaltung ist gewährleistet, dass die Feder bei einem Defekt von mindestens einer Klappe der Klappenanordnung, z.B. einem Bruch einer inneren Klappe der Klappenanordnung durch aus der ausgelenkten Stellung, welche das Federende der Feder auslenkt und somit spannt, z.B. aus einer das Federende aufnehmenden Vertiefung oder Mulde heraustritt und die Klappenanordnung arretiert, wozu diese insbesondere in eine Federausnehmung eingreift, die ausgebildet ist, dass das Federende in diese Ausnehmung einrasten kann. Dieses löst über die Koppelstange und die direkt angetriebene Klappe eine Rückmeldung an den Aktuator und somit die von dem Diagnosesystem gewünschte Fehlermeldung aus. Es ist anzumerkenden, dass die Federausnehmung in der Klappenanordnung für den Eingriff des Federendes nicht zwingend erforderlich ist. Es ist mithin auch möglich, dass die Feder das Klappensystem einfach durch Anlage arretiert, z. B. durch Anlage gegen die Koppelstange oder gegen eine Klappe in der ausgelenkten, entspannten Stellung.

Durch die erfindungsgemäße Ausbildung wird somit eine Detektion von mehr als zwei fehlenden Klappen in einer Klappenanordnung durch den Aktuator realisiert, weil die durch die mindestens eine Federzunge realisierte Arretierung von mindestens einer Klappe, insbesondere auch einer inneren Klappe, oder der Koppelstange über die Koppelstange auf die durch den Aktuator angetriebene Antriebsklappe überträgt.

Die Montage gestaltet sich einfacher und die Kinematik ist weniger fehleranfällig, wenn zumindest das federnde Federende der Feder in einer korrespondierend ausgebildeten Federvertiefung oder Federmulde in dem Fügepartner sitzt. Durch diese Ausgestaltung wird insbesondere gewährleistet, dass das federnde Federende bündig oder flächig mit einer die Ausnehmung umschließenden Fläche des Fügepartners abschließt.

Ausführungsformen sehen die Ausbildung eines nicht notwendigerweise federnden Befestigungsendes an der Feder vor, mit welchem die Feder mit dem Fügepartner verbindbar ist. Das Befestigungsende kann also starr oder oder wenig federnd an dem Fügepartner fixiert sein. Somit weist eine bevorzugte Ausführungsform der Feder einen Befestigungsabschnitt zur Befestigung an dem Fügepartner sowie mindestens ein, vorzugsweise mehrere an diesem Befestigungsabschnitt ausgebildete Federenden.

Besonders bevorzugt sitzen diese federnden Federenden in entsprechenden Federvertiefungen oder Federmulden, in welchen die Federenden durch die angrenzende Klappe in den die Federendeden aufnehmenden Fügepartner gedrückt wird.

Die Feder kann mit dem Fügepartner rastend verbunden oder verschraubt sein, muss aber nicht notwendigerweise mit dem Fügepartner verbunden sein.

Die Feder kann also auch nur zwischen den Fügepartnern eingespannt oder verklemmt sein. So ist es beispielsweise möglich, dass die Feder bzw. dessen mindestens ein Federende aufgrund ihrer Federeinspannung zwischen den Fügepartnern eingeklemmt ist, z. B. in einer Federmulde ausgebildet zur ausrichtenden Aufnahme der Feder an dem Fügepartner.

Das vorgeschlagene System kann vorzugsweise so ausgebildet sein, dass mindestens eine gebrochene Klappe zusätzlich von der Federzunge gezielt aus einer diese aufnehmenden Lagerstelle gedrückt wird, um eine exakte Fehlererfassung zu ermöglichen.

Die Luftführungssteuerung ist ferner so ausgebildet, dass beim Fehlen mindestens einer Klappe der Aktuator in einer "Fail-Safe - Position" verharrt, was bedeutet, dass die "Rest-Klappen" zumindest teilweise offenbleiben, so dass in Strömungsrichtung hinter der Luftöffnung liegenden Aggregate stets mit ausreichender Luft versorgen können.

Die erfindungsgemäße Lösung ist auf beliebig große Luftführungssteuerungen anwendbar, also nicht nur für Klappenanordnungen mit zwei oder drei Klappen beschränkt, sondern auch auf beliebige Klappenanzahlen und Klappengrößen erweiterbar und skalierbar. Die bevorzugte Ausführungsform umfasst eine Klappenanordnung mit drei Klappen, mit zwei äußeren Klappen, an die also nur eine weitere Klappe der Klappenanordnung angrenzt und einer "inneren" Klappe, die also von zwei Klappen der Klappenanordnung eingefasst ist. Dies Klappenanordnung kann aber auch mehrere "innere" Klappen umfassen.

Bevorzugt ist eine Klappe, insbesondere eine äußere Klappe ausgebildet zum direkten Antreiben durch Verstellvorrichtung, auch als "Aktuator" bezeichnet, und besonders bevorzugt ausgebildet als Elektromotor. Diese angetriebene Klappe umfasst vorzugsweise einen Antriebszapfen, der mit der Verstellvorrichtung drehfest verbindbar, insbesondere in diese einsteckbar ausgebildet ist. Die Koppelstange und die Hebelarme übertragen sodann das Drehmoment synchron auf die anderen Klappen der Klappenanordnung.

Bei Ausführungsformen ist die Federausnehmung für den Eingriff eines Federendes der Feder bei Klappenbruch mindestens einer Klappe an der Koppelstange ausgebildet. Das Federende ist dabei als beweglicher Teil der Feder zu verstehen. Bevorzugt ist diese Federausnehmung als eine an das Federende angepasste Vertiefung oder Kerbe ausgebildet, in welcher das Federende einliegt oder von der Klappe eingedrückt wird oder auch einrastet. Bei dieser Ausbildung können das Antriebs- und das Arretierende an demselben Stirnende der Klappenanordnung ausgebildet sein, was eine besonders kompakte Bauweise ermöglicht.

Eine Ausbildung der Luftführungssteuerung sieht vor, dass die Klappen der Klappenanordnung jeweils an dem Arretierende eine sich quer zur Klappendrehachse erstreckende Klappenstirnscheibe aufweisen, die jeweils eine Klappenstirnscheibenfläche definiert und welche eine segmentförmige Federausnehmung ausgebildet zum Eingriff des Federendes der Feder umfasst.

Vorzugsweise ist diese Klappenstirnscheibe als sich quer zur Klappendrehachse an der Klappenstirnseite des Arretierendes der Klappen erstreckende Scheibe oder Platte ausgebildet, die vorzugsweise einstückig an den Klappen ausgebildet ist. Besonders bevorzugt weist die Klappenstirnscheibe in der Seitenansicht auf die Klappe entlang der Klappendrehachse eine kreisförmige Geometrie auf. Diese Klappenstirnscheibe liegt also in Einbaulage innen seitlich an den Fügepartner zur Aufnahme der Klappenanordnung an und drückt das mindestens eine Federende der Feder entweder nur gegen den Fügepartner oder vorzugsweise in eine muldenförmige Federvertiefung für das Federende. Erst bei einem Klappenbruch und evtl. Herausfallen mindestens einer Klappe tritt das Federende aufgrund der Federkraft aus der ausgelenkten Stellung in der Federvertiefung heraus und rastet in der Federausnehmung an der Klappenanordnung ein, um diese gegen eine weitere Bewegung zu arretieren.

Bei der bevorzugten Ausführungsform sind Klappenstirnscheiben an beiden Klappenstirnseiten der Klappenfläche vorgesehen, insbesondere einstückig an diesem ausgebildet, z.B. im Spritzgussverfahren.

Bei einer bevorzugten Ausführungsform ist der Fügepartner zur Aufnahme der Klappenanordnung als Rahmen ausgebildet, insbesondere ein umfänglich geschlossener Rahmen, welcher ausgebildet ist zur Aufnahme oder zum drehbaren Einsetzen der Klappenanordnung und somit einen "Luftführungssteuerungsrahmen" bildet.

Bevorzugt weist der Rahmen sich beabstandet zueinander erstreckende Längsstege und diese verbindende, sich also zwischen diesen erstreckende Querstege auf. In diesen Längsstegen sind in definierten Klappendrehachsenabstand paarweise koaxial angeordnete Klappenöffnungen vorgesehen, in welche zylindrische Klappenzapfen oder Stifte der Klappen eingesetzt werden können oder durch welche eine mit den Klappen verbindbare Achse gesteckt werden kann.

Bei der bevorzugten Ausführungsform weisen die Klappen von den Klappenstirnseiten oder den Klappenstirnscheiben sich entlang der Klappendrehachse erstreckende, zylindrische Klappenzapfen auf, die drehbar in die entsprechenden Klappenöffnungen des Fügepartners, insbesondere des Rahmens, einsetzbar, besonders bevorzugt rastbar einschnappbar ausgebildet sind. Vorzugsweise sind diese Klappenzapfen einstückig an den Klappen ausgebildet, z.B. angespritzt.

Besonders bevorzugt sind die sich mit ihrer zylindrischen Mantelfläche um die Klappendrehachse erstreckenden Klappenzapfen beidseitig einstückig an den Klappenstirnseiten angeformt und drehbar in die entsprechende Klappenöffnung des Rahmens oder eines anderen Fügepartners eingesetzt einsetzbar, besonders bevorzugt einrastbar einsetzbar. Die Klappenzapfen umschließen also mit ihrer seitlich von der Klappenstirnseite abragenden zylindrischen Mantelfläche die Klappendrehachse.

Der Fügepartner zur drehbaren Aufnahme der Klappen weist demnach Lagerstellen, insbesondere Lagerlöcher oder Lagerbuchsen zur drehbaren Aufnahme der Klappenzapfen der Klappen auf. Dieser Rahmen kann somit als vorgefertigte Baugruppe mit der Klappenanordnung, also den in den Rahmen drehbar eingesetzten Klappen, und dem Aktuator ausgebildet sein. Diese Baugruppe kann dann in dem Kraftfahrzeug verbaut werden, z.B. in eine entsprechende Öffnung hinter dem Kühlergitter oder der Lufteintrittsöffnung am Vorderende des Kraftfahrzeugs. Besonders bevorzugt ist diese werkzeuglos einrastbar ausgebildet, z.B. mittels komplementären Rastlaschen und -flächen, die sich in Einbaulage an den Fügepartner gegenseitig hintergreifen.

Somit kann aus dem Rahmen der Rahmenbestandteil einer größeren Baugruppe oder zu dieser zusammensetzbar sein, z.B. einem Halterahmen mit einer matrixartig angeordneten Öffnung, in welche die Rahmen mit der Klappenanordnung, also die Luftführungssteuerungsrahmen einsetzbar sind.

Bei einer besonders einfach montierbaren Ausführungsform einer solchen Baugruppe, insbesondere des Rahmens, ist diese mehrteilig, insbesondere zweiteilige Ausbildung. So können die Klappen der Klappenanordnung mit den Klappenzapfen in die eine Halbschale eingelegt werden und sodann wird die zweite Halbschale aufgesetzt, z.B. aufgeschnappt, verclipst oder verschraubt, so dass die Klappenzapfen in den durch die beiden Halbschalen gebildeten Lagerschalen drehbeweglich aufgenommen sind. Vorzugsweise werden die Rahmen also gebildet durch zwei oder mehr miteinander verbindbare Rahmenteile, insbesondere Rahmenhalbschalen mit Lagerstellen, in welche die Klappen mit den Klappenzapfen drehbar einsetzbar sind.

Beispielsweise kann der aufnehmende Rahmen ein Clipslager umfassen, also eine mit dem Rahmen verbindbare Platte oder Abdeckung, welche verbaut mit dem Rahmen die Lagerstellen für die Klappen bildet.

Besonders bevorzugt umfasst der Rahmen also einen Klappenbereich, in welchen die mehreren Klappen zur Bildung der Klappenanordnung drehbar eingesetzt sind und seitlich davon den Aktuator, welcher zumindest eine Klappe der Klappen antreibt, vorzugsweise einen Antriebszapfen einer angetriebenen Klappe.

Bei einer bevorzugten Ausführungsform ist die Feder derart ausgebildet, dass diese stets die an eine defekte Klappe angrenzende Klappe arretiert, also gegen weitere Drehung sperrt.

Vorzugsweise ist die Feder als rechteckige, längliche Blattfeder ausgebildet, die sich entlang einer Federlängsachse sowie entlang einer quer zur Federlängsachse erstreckenden Federquerachse erstreckt. Dabei ist die Blattfeder um ein Mehrfaches länger ausgebildet entlang der Federlängsachse als entlang der Federquerachse, vorzugsweise um etwa 20- bis 30-mal länger als breiter. Somit ist gewährleistet, dass diese Blattfeder sich seitlich quer erstreckend in der Innenseite der Vertikalstrebe des Fügepartners bzw. des Rahmens einsetzbar ist und beim Herausfallen einer mittleren Klappe der Klappenanordnung die jeweils angrenzende Klappe arretiert. Die Länge der Feder sollte also mindestens so lang sein, dass diese etwas länger ist als der lichte Abstand zwischen zwei angrenzenden Drehachsen der Klappen einer Klappenanordnung.

Eine andere Ausführungsform sieht ebenfalls die Ausbildung der Feder als Flachfeder oder Blattfeder vor, die an einem das Befestigungsende bildenden und sich vorzugsweise entlang einer Federlängsachse erstreckenden einen Längsschenkel aufweist. An diesem Längsschenkel sind quererstreckend zu dieser Federlängsachse und beabstandet zueinander im Abstand des lichten Abstands der Drehachsen der Klappenanordnung mindestens zwei, vorzugsweise so viele federnde Federschenkel wie Klappen in der Klappenanordnung vorgesehen. Das Befestigungsende, also der Längsschenkel ist in Einbaulage mit dem Fügepartner, vorzugsweise also dem Rahmen, verbunden und muss nicht notwendigerweise federnd ausgebildet sein.

Die federnden Federschenkel arretieren einen Arretierpartner der Klappenanordnung, insbesondere eine Klappe oder eine Koppelstange und greifen vorzugweise in korrespondierend an dem Arretier- oder Fügepartner ausgebildete Federvertiefungen ein, vorzugsweise ausgebildet als an die Geometrie der Federschenkel angepasste Mulden für die Federschenkel, hier bezeichnet als Federmulden, in welche diese durch die anliegenden Klappen, insbesondere durch die Klappenstirnscheiben der Klappenanordnung gehalten werden, also ausgelenkt und vorgespannt werden.

Beim Defekt mindestens einer Klappe, insbesondere dem Herausfallen der Klappe aus der Klappenanordnung, z.B. verursacht durch den Bruch einer Klappe, federt der ausgelegte oder ausgelenkte Federschenkel wegen der sodann fehlenden, angrenzenden Klappe, insbesondere der Klappenstirnscheibe zurück und arretiert sodann an die fehlende Klappe angrenzende Klappe der Klappenanordnung.

Bei einer Klappenanordnung mit drei Klappen weist die Feder somit in der Frontansicht im Wesentlichen die Geometrie eines Buchstabens "E" auf, bei welcher sich der nicht notwendigerweise federnd ausgebildete Längsschenkel entlang einer Federlängsachse erstreckt und von dem die Federschenkel quer erstreckend zur Federlängsachse parallel zueinander erstreckend abragen.

Auch bei dieser Ausführungsform wird also eine Arretierung sämtlicher Klappen der Klappenanordnung bei Defekt mindestens einer Klappe realisiert und somit an das Diagnosesystem als Fehler gemeldet.

Bevorzugt bildet die Luftführungssteuerung den Bestandteil eines Kühlergitters oder ist in diesen einsetzbar.

Größere Einheiten können dadurch realisiert werden, dass mehrere Baugruppen, umfassend Rahmen mit Klappenanordnungen und entsprechenden Aktuatoren zu einem größeren Gesamtsystem modular zusammensetzbar sind.

Besonders bevorzugt ist die Ausbildung der Klappenanordnung aus Kunststoff, weil diese Teile besonders einfach in größeren Mengen gefertigt werden können, besonders bevorzugt im Kunststoff-Spritzgussverfahren.

Daneben betrifft die Erfindung ein Kühlergitter oder eine Baugruppe für ein Kühlergitter, umfassend einen Rahmen mit einer in diesem Rahmen drehbar aufgenommenen Klappenanordnung, umfassend mehrere jalousieartig im Verhältnis zueinander angeordnete Klappen.

Die Baugruppe kann zudem ausgebildet sein, um den vorzugsweise als Aktuator ausgebildeten Elektromotor in diesem aufzunehmen.

Bevorzugte Ausführungsbeispiele der Erfindung sind in den nachfolgenden Figuren beispielhaft veranschaulicht

Weitere Merkmale und Vorteile der vorliegenden Erfindung werden deutlich anhand der nachfolgenden Figurenbeschreibung bevorzugter Ausführungsbeispiele unter Bezugnahme auf die beiliegenden Abbildungen. In dieser Hinsicht wird Richtungsterminologie wie etwa "oben", "unten", "vorne", "hinten", "vorderes", "hinteres", usw. in Bezug auf die Orientierung der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist. Die Darstellungen in den Figuren sind im Wesentlichen maßstäblich. Zur Veranschaulichung von Details können jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail. Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen. Ferner sollte verstanden werden, dass die Begriffe "etwa", "im Wesentlichen, "und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc.

Schließlich sind bei mehreren gleichen Bauteilen bzw. Elementen aus Gründen der Übersichtlichkeit nur jeweils eins mit einem Bezugszeichen versehen.

Sämtliche Merkmale der jeweiligen Ausführungsbeispiele seien hierbei unabhängig voneinander auch allgemein im Rahmen der Erfindung offenbart. Gleiche Bezugsziffern der Figuren beziehen sich auf gleiche Bauteile bzw. Merkmale.

Es zeigen:
- Figur 1: eine isometrische Frontansicht von rechts einer ersten Ausführungsform einer Luftführungssteuerung ausgebildet als Luftführungssteuerungsrahmen bei geöffneter Klappenanordnung;
- Figur 2: eine isometrische Frontansicht der Ausführungsform gemäß Figur 1 von links;
- Figur 3: eine isometrische Frontansicht der Ausführungsform gemäß Figur 1 bei geschlossener Klappenanordnung;
- Figur 4: die isometrische Frontansicht der Ausführungsform gemäß Figur 3 bei geöffneter Klappenanordnung und entfernter mittlerer Klappe;
- Figur 5: eine isometrische Frontansicht von links einer zweiten Ausführungsform des Luftführungssteuerungsrahmens bei geöffneter Klappenanordnung;
- Figur 6: eine isometrische Frontansicht der zweiten Ausführungsform gemäß Figur 5 mit fehlender mittlerer Klappe;
- Figur 7: eine Explosionsdarstellung aller Bauteile beider Ausführungsformen der Luftführungssteuerungsrahmen gemäß beider Ausführungsformen;
- Figur 8: eine Frontansicht eines Luftsteuerungsrahmens umfassend zwei Klappenanordnungen;
- Figur 9: eine vergrößerte isometrische Draufsicht des rechtseitigen Endes des Luftsteuerungsrahmens gemäß Figur 8 in der nicht blockierten Freilaufstellung;
- Figur 10: die Ansicht gemäß Figur 9 bei entferntem Clipslager und;
- Figur 11: die Ansicht gemäß Figur 9 mit eingebautem Clipslager und mit blockierter Koppelstange.

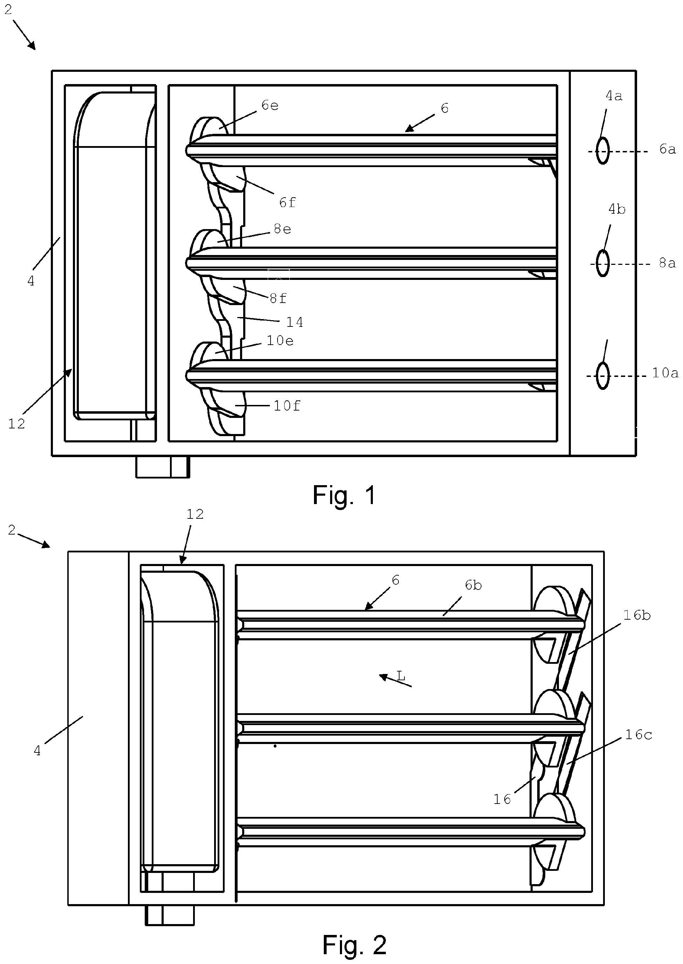

Figur 1 zeigt eine isometrische Ansicht der ersten Ausführungsform der Luftführungsvorrichtung ausgebildet als Luftführungssteuerungsrahmen 2, der vorliegend ausgebildet ist aus Kunststoffteilen und im Wesentlichen den umgebenden Rahmen 4, eine Klappenanordnung umfassend drei parallel zueinander angeordnete Klappen 6 sowie einen ebenfalls in dem Rahmen 4 aufgenommenen Aktuator 12 umfasst.

Der Rahmen 4 ist im Wesentlichen kastenartig, rechteckig aufgebaut und umfasst zwei parallel zueinander beabstandete Rahmenlängsschenkel, die in der Länge der Klappen 6, 8, 10 voneinander beabstandet sind und verbunden werden über sich quer zur Längsachse dieser Rahmenlängsschenkel erstreckenden Rahmenquerschenkeln.

Linksseitig erstrecken sich diese parallel zu den Klappendrehachsen 6a, 8a, 10a Rahmenquerschenkel über den in den Figuren linksseitigen Rahmenlängsschenkel weiter nach außen und bilden dort einen weiteren kastenartigen Abschnitt, in welchem ein Aktuator 12 eingesetzt ist.

Somit sind die drei eine Klappenanordnung bildenden Klappen 6 sowie der Aktuator 12 zusammen in dem diese aufnehmend umgebenden Rahmen 4 aufgenommen und bilden eine Baugruppe, die weiter verbaut werden kann.

Jede Klappe umfasst eine sich entlang einer Klappenlängsachse erstreckende Klappendrehachse 6a an der eine flügelartig gewölbte Klappenfläche 6b ausgebildet ist, die zwei in Klappenlängsrichtung voneinander beabstandet und sich parallel zueinander erstreckenden Klappenlängsseiten und diese an den Stirnenden begrenzenden Klappenstirnseiten begrenzt wird. Entlang der Klappendrehachse 6a erstreckt sich um diesen herum von den Klappenstirnseiten jeweils Klappenzapfen 6c, 6d, die also von den Klappenstirnseiten abstehen und in entsprechende Klappenöffnungen 4a, 4b, 4c in dem Rahmen 4 eingreifen.

Bei der in den Figuren 1 bis 4 dargestellten ersten Ausführungsform weisen die Klappen 6 an dem in Einbaulage dem Aktuator 12 zugewandten Stirnende jeweils eine sich quer zur Klappendrehachse 6a erstreckende, im Wesentlichen kreisförmig ausgebildete Klappenstirnscheibe 6e auf, welche sich also quer zur Klappenfläche 6b erstreckt. Ferner ist einseitig radial abragend von der jeweiligen Klappendrehachse 6a, seitlich versetzt zu den übereinander angeordneten Klappendrehachsen 6a, ein, einen Hebelarm bildender Klappenarm 6f vorgesehen, der einen in Einbaulage nach außen zu dem Rahmen 4 ragenden Stift aufweist. Jeder dieser Klappenarme 6f mit dem entsprechenden Stift ist drehbar mit einer Koppelstange 14 verbindbar oder verbunden. Die stabförmig, länglich ausgebildete Koppelstange 14 ist also an dem Antriebsende drehbar verbunden mit allen Klappen 6 der Klappenanordnung, sodass die Drehung der von dem Aktuator 12 angetriebene Antriebszapfen 6g, der vorliegend sternförmig ausgebildet ist, synchron auf die anderen Klappen 6 der Klappenanordnung übertragen wird und sich die Klappen 6 somit um ihre jeweiligen Klappendrehachsen 6a drehen.

Dieses mit dem Klappenarm 6f ausgebildete Stirnende der Klappen 6 stellt das Antriebsende der Klappen 6 dar.

Bei der in den Figuren 1 bis 4 dargestellten ersten Ausführungsform ist das Arretierende an dem gegenüberliegenden Klappenstirnende ausgebildet, an denen ebenfalls eine Klappenstirnscheibe 6h ausgebildet ist, die sich jeweils mit ihrer Klappenstirnscheibenfläche ebenfalls quer zur Klappenfläche 6b erstreckt und von welcher der Klappenzapfen 6d entlang der Klappendrehachse 6a erstreckend nach außen abragt. Diese Klappenstirnscheibe 6h ist jedoch nicht vollumfänglich als geschlossene Kreisfläche ausgebildet, sondern weist eine segment- oder tortenstückförmige Ausnehmung 6i auf, welche etwa ein Viertel der Klappenstirnscheibenfläche ausnimmt.

Bei der ersten Ausführungsform ist an dem Antriebsende gegenüberliegenden Stirnende der Klappen 6 in dem Rahmenlängsschenkel eine die Arretiervorrichtung bildende Blattfeder 16 eingesetzt. Diese Blattfeder 16 umfasst einen sich in der Federlängsrichtung erstreckendes Befestigungsende 16a, von dem in einem Winkel von etwa 50 bis 60° zur Horizontalen zwei federnde Federenden 16b, 16c abgehen, die zudem aus der Ebene des Befestigungsendes 16a nach oben bzw. vorne federn. Diese Federzungen 16b, 16c sitzen in Einbaulage in entsprechend ausgebildeten Federvertiefungen 4d, 4e, die muldenförmig ausgebildet an der Innenfläche der Rahmenlängsschenkel vorgesehen sind, die also angepasst sind an die Größe der Federzunge 16b, 16c, sodass die Federzunge 16b, 16c somit in diese Federvertiefungen 4d, 4e von den anliegenden Klappenstirnflächen 6h der Klappe 6 gedrückt werden.

Die Figuren 1 und 2 zeigen die Klappenanordnung mit den Klappen 6 in der Öffnungsstellung, bei welcher sich also die Längsseiten der Klappenflächen 6b quer zu dem durch den Rahmen 4 gebildeten Luftöffnung erstrecken, so dass die Luft durch diese Luftöffnung hindurchtreten und zu dem in Strömungsrichtung L nachgelagerten Aggregat des Kfz gelangen kann.

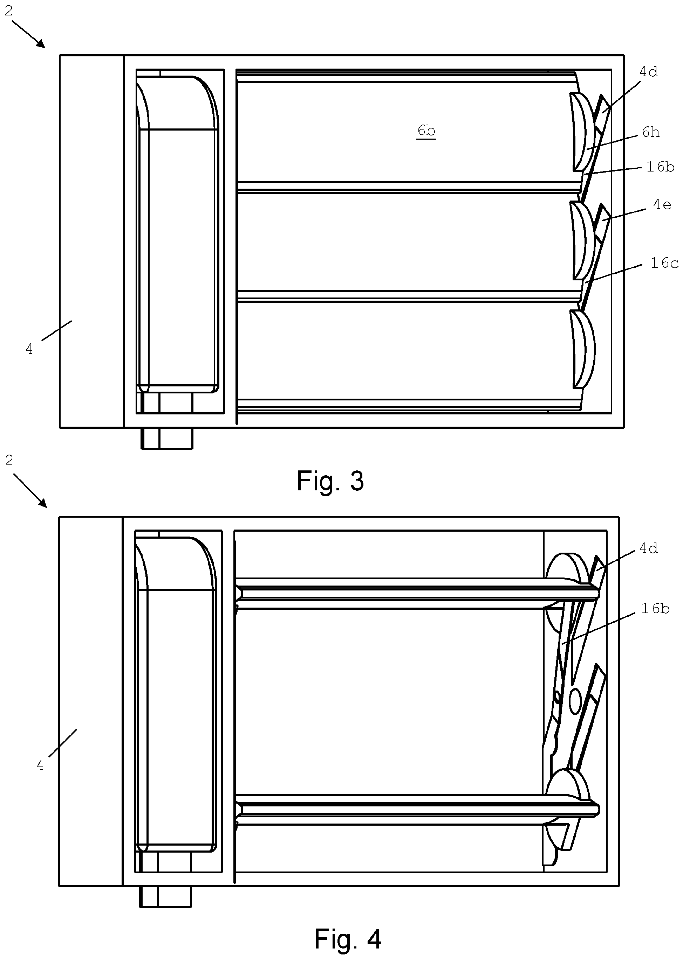

In dieser Position ist insbesondere in Figur 2 deutlich zu erkennen, wie die Klappenflächen 6b und die Stirnklappenfläche 6h die Federzungen 16b, 16c der Blattfeder in den korrespondierenden Federausnehmungen 4d, 4e eindrücken und dort halten und somit ein Herausfedern dieser Federarme 16b, 16c unterbinden. Dieses gilt auch bei einer Drehung der Klappen um 90° aus der in den Figuren 1 und 2 dargestellten Öffnungsstellung in die in die Figur 3 dargestellte Schließstellung, in welcher die Klappenflächen 6b die Luftöffnung vollständig verschließen. Auch in dieser Stellung drückt die Klappenstirnscheibe 6h die Federarme 6b, 6c weiterhin in die korrespondierenden Federausnehmungen 4d, 4e.

Erst bei dem in der Figur 4 dargestellten Klappenbruch, bei dem z.B. die mittlere Klappe gebrochen und somit aus der Klappenanordnung herausgefallen ist, kann der Federarm 16b wegen der fehlenden Klappenstirnscheibe 6h der mittleren Klappe aus der niedergedrückten Stellung aus der Federausnehmung 4d austreten. Bei der Drehung der oberen Klappe 6 greift sodann der obere Federarm 16b unter die Klappenflächen 6b dieser oberen Klappe 6, was durch die Federausnehmung 6i in der Klappenstirnscheibe 6h realisiert wird. Durch diese Ausgestaltung wird somit ermöglicht, dass auch einem Klappenbruch einer mittleren Klappe 6 an den Aktuator 12 mittels der Koppelstange 14 übermittelt wird, also nicht einer am äußeren Ende einer Klappenanordnung angeordneten Klappen.

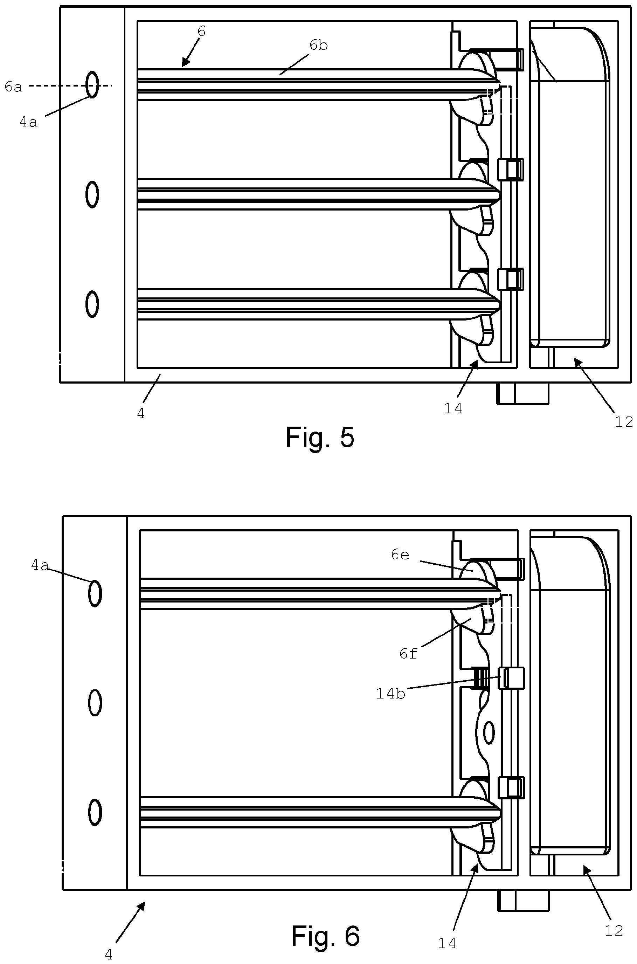

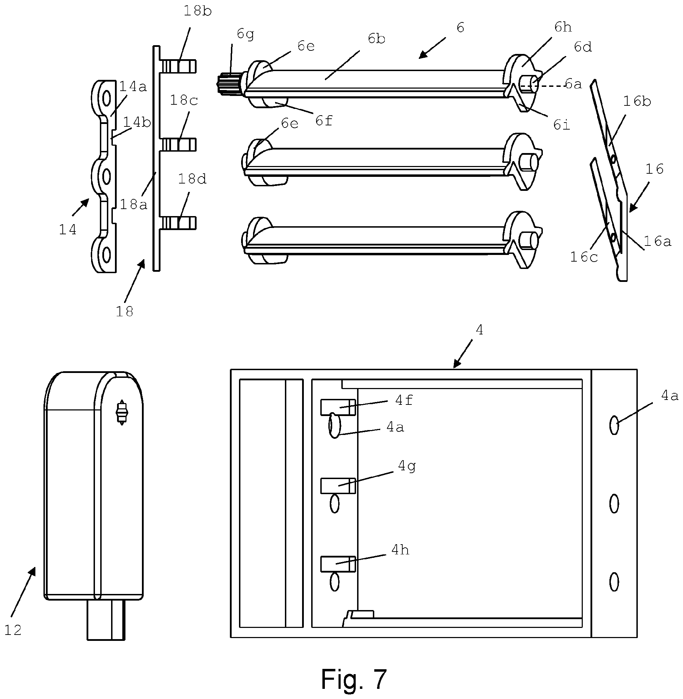

Die in den Figuren 5 bis 7 dargestellte zweite Ausführungsform unterscheidet sich von der in den Figuren 1 bis 4 dargestellten ersten Ausführungsform dadurch, dass die Antriebseite und das Arretierende auf derselben Seite direkt neben dem Aktuator 12 angeordnet sind, was den Aufbau nochmals kompakter gestaltet. Zu diesem Zweck weist die Koppelstange 14 mehrere Federausnehmungen 14b auf, die mit armförmig ausgebildeten Federzungen 18b, 18c, 18d der alternativ ausgebildeten Feder 18 zusammenarbeiten. Auch diese Feder 18 weist einen im Wesentlichen sich entlang der Federlängsachse erstreckendes Befestigungsende 18a auf, dass entlang des Längssteges des Rahmens 4 innenseitig an diesem fixiert ist und wobei an diesem Befestigungsende 18a quer erstreckend zu dessen Längsachse die federnden Federarme 18b, 18c, 18d ausgebildet sind, die zudem aus der Ebene des Befestigungsendes 18a nach oben federn. In Einbaulage greifen diese Federarme 18b, 18c, 18d in korrespondiert ausgebildete Federausnehmungen 4f, 4g, 4h ein, die jeweils knapp oberhalb der Klappenöffnung 4a in dem Rahmen 4 an der der Klappenanordnung zugewandten Seite ausgeformt sind. Somit sitzen die Federarme 18b, 18c, 18d in diesen Federausnehmungen 4f, 4g, 4h, wenn die Klappen 6 der Klappenanordnung in dem Rahmen eingesetzt sind. Tritt ein Klappenbruch der mittleren Klappe auf, wie dieses in der Figur 6 dargestellt ist, wird der dieser Klappe zugeordnete Federarm 18c nicht mehr durch die Klappenstirnscheibe 6e in der Federausnehmung 4g gehalten, sodass die Feder nach innen aus der Federausnehmung 4g vorspringt und in die korrespondierende Federmulde 14b der Koppelstange 14 einrastet und somit deren Bewegung verhindert.

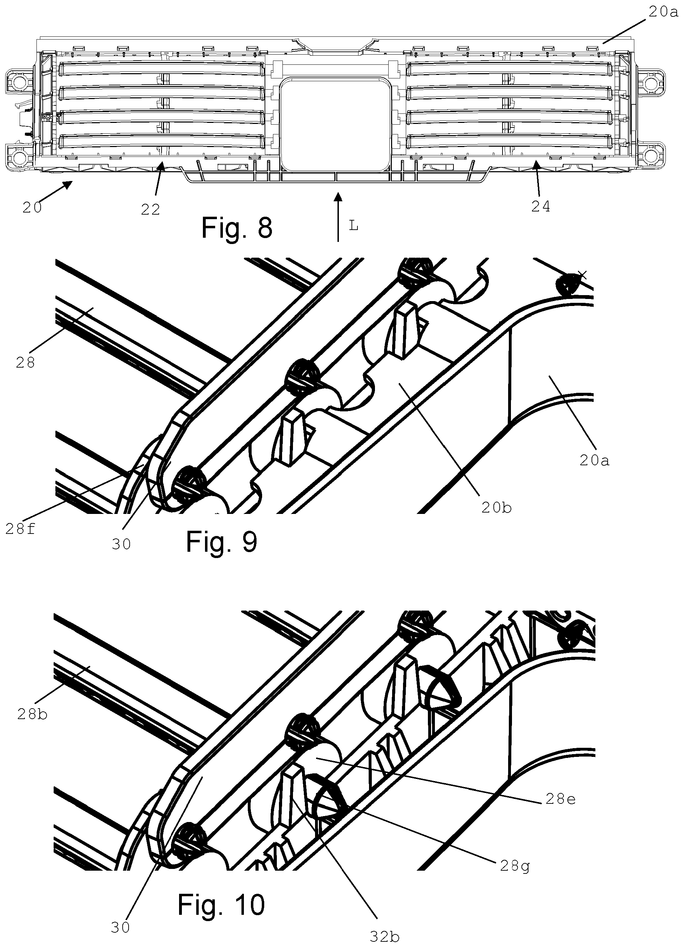

Figur 8 zeigt eine Frontansicht eines als Luftführungssteuerungsrahmen 20 ausgebildeten Rahmens mit zwei in seitlichen Luftöffnungen angeordneten Klappenanordnungen 22, 24 und einem mittleren Durchgangsfenster.

Die Klappenanordnung umfasst jeweils 4 in Einbaulage mit horizontaler Klappendrehachse übereinander angeordnete Klappen 28, von denen die jeweils oberste Klappe 28 in der Figur als Antriebsklappe ausgebildet ist und über einen nicht dargestellten Aktuator antreibbar ist.

Die Klappen 28 der Klappenanordnungen 22, 24 sind über eine seitlich angeordnete Koppelstange 30 drehbar mit einem jeweiligen Klappenarm 28f der Klappen 28 verbunden, um somit beim Antrieb der Antriebsklappe alle Klappen 28 synchron zu bewegen.

Bei dieser Ausführungsform sind also Antriebsende und Arretierende zur besonders kompakten Gestaltung auf derselben Seite ausgebildet, obwohl dieses nicht zwangsläufig so sein muss.

Die Klappen 28 sitzen wieder mit ihren entlang der Klappendrehachse an den Stirnenden abragenden Klappenzapfen 28g drehbeweglich in dem Luftsteuerungsrahmen 20, insbesondere in dementsprechend ausgebildeten Lagerbuchsen des Luftführungssteuerungsrahmens 20.

Der Luftführungssteuerungsrahmen 20 ist bei der vorliegenden Ausführungsform mehrteilig ausgebildet und umfasst einen in den Figuren unterseitigen Hauptrahmen 20a, in welchen die Klappenzapfen eingelegt sind und auf dessen Oberseite ein komplementär ausgebildetes, flächiges Clipslager 20b aufgeschnappt z.B. eingeclipst sind, das den anderen Teil bzw. komplementären Teil des Luftsteuerungsrahmens und der Lagerbuchsen bildet und somit zusammen mit dem Hauptrahmen 20a die Lagerzapfen der Klappen 28 drehbeweglich aufnehmen. Diese mehrteilige, hier zweiteilige Ausbildung des Luftsteuerungsrahmens 20 ermöglicht eine besonders einfache Montage und Wartung der Klappen 28, z.B. bei einem Klappenbruch einer inneren Klappe.

In den Figuren 9 und 10 ist die Klappenanordnung 24 im Normalbetrieb dargestellt, wobei also die Federzungen 32b der innenseitig mit dem Luftführungssteuerungsrahmen 20 verbundenen Feder durch die Klappenstirnscheiben 28e der Klappen 28 unter Vorspannung in entsprechenden Federausnehmungen des Luftsteuerungsrahmens 20 gehalten werden und wobei vorliegend die Federausnehmung teilweise in dem Hauptrahmen 20a und dem Clipslager 20b ausgebildet ist.

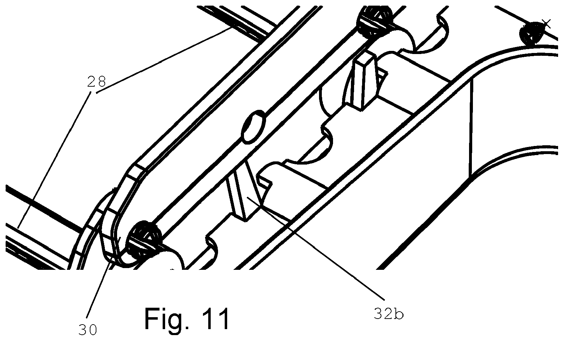

Figur 11 zeigt eine isometrische Draufsicht eines Klappenbruchs, also einer fehlenden inneren Klappe, welche zwischen den zwei angrenzenden Klappen 28 angeordnet war. In diesem Fall fehlt die Klappe und somit die Anpresskraft gegenüber der Federzunge 32b, welche somit aufgrund der Federkraft aus der korrespondierenden Federausnehmung heraustritt, also ausgelenkt wird und dann an der Stirnseite der Koppelstange 30 anliegt und diese somit gegen eine weitere Bewegung blockiert. Diese Ausgestaltung hat den Vorteil, dass die Koppelstange 30 entlang der gesamten stirnseitigen Anlagefläche, welche der vorderen Stirnseite der Federzungen 32b zugewandt ist, als Anlagefläche dient, also auch keine Ausnehmungen für die Federzungen 32b vorgesehen sein müssen.

### Bezugszeichenliste

- 2: Luftführungssteuerungsrahmen
- 4: Rahmen
- 4a, 4b, 4c: Klappenöffnung
- 4d, 4e: Federvertiefung
- 6: Klappe
- 6a: Klappendrehachse
- 6b: Klappenfläche
- 6c,6d: Klappenzapfen
- 6e: Klappenstirnscheibe
- 6f: Klappenarm
- 6g: Antriebszapfen
- 6h: Klappenstirnscheibe
- 6i: Federausnehmung
- 12: Aktuator
- 14: Koppelstange
- 14b: Federausnehmung
- 16: Feder
- 16a: Längsschenkel
- 16b,c,d: Federzunge
- 18: Feder
- 18a: Längsschenkel
- 18b,c,d: Federzunge
- 20: Luftführungssteuerungsrahmen
- 20a: Hauptrahmen
- 20b: Clipslager
- 22, 24: Klappenanordnung
- 26: Durchgangsfenster
- 28: Klappe
- 28b: Klappenfläche
- 28e: Klappenstirnscheibe
- 28f: Klappenarm
- 28g: Klappenzapfen
- 30: Koppelstange
- 32b: Federzunge

## Patentansprüche

1. Luftführungssteuerung, die in eine Luftöffnung zur Steuerung von entlang einer Luftströmungsrichtung (L) einströmender Luft einsetzbar ist oder diese bildet,
mit einer Klappenanordnung umfassend mehrere in die Luftöffnung einsetzbare, jalousieartig im Verhältnis zueinander angeordnete Klappen,
wobei jede Klappe eine sich entlang einer Klappendrehachse (6a) und sich quer zu dieser erstreckende, quadratische oder rechteckige Klappenfläche (6b) umfasst, die begrenzt ist durch sich parallel zur Klappendrehachse (6a) erstreckende Klappenlängsseiten und quer zur Klappendrehachse ersteckende Klappenstirnseiten,
wobei die Klappen (6) der Klappenanordnung entlang der Klappendrehachse an einer ersten Klappenstirnseite und einem gegenüberliegenden, zweiten Klappenstirnende jeweils relativbeweglich, insbesondere drehbar in einen Fügepartner drehbeweglich einsetzbar sind,
wobei jede Klappe der Klappenanordnung mittels einer Verstellvorrichtung verstellbar ist zwischen einer die Luftöffnung freigebenden Öffnungsstellung und einer die Luftöffnung zumindest teilweise verschließenden Schließstellung zur selektiven Freigabe und zum Verschließen der Luftöffnung zur Realisierung eines Thermo-Managements einer in Luftströmungsrichtung (L) der Luftöffnung nachgelagerten KFZ-Anordnung,
wobei jede Klappe (6) der Klappenanordnung an einer Klappenstirnseite als Antriebsende ausgebildet ist,
wozu jede Klappe (6) an dieser Klappenstirnseite einen auf die Klappendrehachse wirkenden Hebelarm aufweist, der mit einer Koppelstange (14) drehbar verbindbar ist,
**DADURCH GEKENNZEICHNET,**
**DASS** jede Klappe der Klappenanordnung an einer Klappenstirnseite als Arretierende ausgebildet ist,
wozu zwischen einer Klappe (6) und dem Fügepartner mindestens eine Feder (16; 18) vorgesehen ist,
die mit mindestens einer federnden Federzunge (16b, 16c) unter Auslenkung durch die Klappen (6) und gegen die Federkraft der Federzunge so zwischen mindestens einer Klappe und dem Fügepartner sitzt, dass diese bei einem Klappenbruch von mindestens einer Klappe (6) der Klappenanordnung eine Arretierung der Klappenanordnung bewirkt.

2. Luftführungssteuerung nach Anspruch 1, **DADURCH GEKENNZEICHNET, DASS** die Federzunge in einer Federvertiefung (4d, 4e) zur ausgelenkten Aufnahme der Federzunge (16b, 16c; 18b, 18c, 18d) in dem Fügepartner sitzt.

3. Luftführungssteuerung nach Anspruch 1 oder 2, **DADURCH GEKENNZEICHNET, DASS** die Feder (16; 18) ein Befestigungsende umfasst, das mit dem Fügepartner verbindbar ist.

4. Luftführungssteuerung nach Anspruch 1 bis 3, **DADURCH GEKENNZEICHNET, DASS** die Feder (16; 18) mehrere getrennte Federzungen (16b, 16c; 18b, 18c, 18d) aufweist.

5. Luftführungssteuerung nach einem der vorhergehenden Ansprüche, **DADURCH GEKENNZEICHNET, DASS** mindestens eine Federzunge (16b, 16c; 18b, 18c, 18d) ausgebildet ist, um die Koppelstange zu arretieren.

6. Luftführungssteuerung nach Anspruch 1 bis 5, **DADURCH GEKENNZEICHNET, dass** die Feder die Arretierung durch Eingriff mindestens einer Federzunge (16b, 16c; 18b, 18c, 18d) in eine Federausnehmung (4d, 4e) bewirkt.

7. Luftführungssteuerung nach Anspruch 6, **DADURCH GEKENNZEICHNET, DASS** die Federzunge (16b, 16c; 18b, 18c, 18d) der Feder (16; 18) in eine Federausnehmung (14b) an der Koppelstange (14) eingreift.

8. Luftführungssteuerung nach einem der vorhergehenden Ansprüche, **DADURCH GEKENNZEICHNET, DASS** das Antriebsende an einem ersten Klappenstirnende und das Arretierende an dem diesem ersten Klappenstirnende gegenüberliegenden zweiten Klappenstirnende ausgebildet ist.

9. Luftführungssteuerung nach einem der vorhergehenden Ansprüche, **DADURCH GEKENNZEICHNET, DASS** die Klappen (6) der Klappenanordnung jeweils an dem Arretierende eine sich quer zur Klappendrehachse erstreckende Klappenstirnscheibe (6h) aufweisen, die jeweils eine Klappenstirnscheibenfläche definiert und welche eine segmentförmige Federausnehmung (6i) ausgebildet zum Eingriff der Federzunge (16b, 16c) der Feder (16) umfasst.

10. Luftführungssteuerung nach einem der vorhergehenden Ansprüche, **DADURCH GEKENNZEICHNET, DASS** der Fügepartner als ein umfänglich geschlossener Rahmen (4) ausgebildet ist, in dem die Klappen der Klappenanordnung drehbeweglich aufnehmbar sind und dass auch die Verstellvorrichtung in dem Rahmen (4) angeordnet ist.

11. Luftführungssteuerung nach einem der vorhergehenden Ansprüche, **DADURCH GEKENNZEICHNET, DASS** die Feder (16; 18) als Flach- oder Blattfeder ausgebildet ist, die sich entlang einer Federlängsachse sowie entlang einer quer zur Federlängsachse erstreckenden Federquerachse erstreckt und DASS die Blattfeder entlang der Federlängsachse um ein Mehrfaches länger ausgebildet ist als entlang der Federquerachse.

12. Luftführungssteuerung nach Anspruch 11, **DADURCH GEKENNZEICHNET, DASS** die Feder (16; 18) einen das Befestigungsende bildenden und sich entlang einer Federlängsachse erstreckenden Längsschenkel (16a; 18a) aufweist, und DASS quer erstreckend zu dem Längsschenkel (16a; 18a) mindestens eine federnde Federzunge (16b, 16c; 18b, 18c, 18d) ausgebildet ist.

13. Luftführungssteuerung nach einem der vorhergehenden Ansprüche, **DADURCH GEKENNZEICHNET, DASS** an den Klappenstirnseiten sich entlang der Klappendrehachse erstreckende Klappenzapfen (6c, 6d) ausgebildet sind.

14. Luftführungssteuerung nach einem der vorhergehenden Ansprüche, **DADURCH GEKENNZEICHNET, DASS** diese Bestandteile eines Kühlergitters oder in dieses einsetzbar ausgebildet ist.

15. Kühlergitter umfassend mindestens eine Luftführungssteuerung nach einem der vorhergehenden Ansprüche.

## Claims

1. Air guide controller insertable into or forming an air opening for controlling air flowing in along an air flow direction (L),
having a flap arrangement comprising a plurality of flaps insertable into the air opening and arranged in a louver-like manner in relation to one another,
wherein each flap comprises a square or rectangular flap surface (6b) extending along a flap axis of rotation (6a), being bounded by flap longitudinal sides extending parallel to the flap axis of rotation (6a) and flap end sides extending transversely to the flap axis of rotation,
wherein the flaps (6) of the flap arrangement can be inserted along the flap axis of rotation at a first flap end face and an opposite, second flap end face, each in a relatively movable manner, in particular rotatably, into a joining partner,
wherein each flap of the flap arrangement is adjustable by means of an adjustment device between an open position releasing the air opening and a closed position at least partially closing the air opening for selectively releasing and closing the air opening for realizing a thermal management of a motor vehicle arrangement downstream of the air opening in the air flow direction (L),
wherein each flap (6) of the flap arrangement is designed as a drive end at a flap end face,
for which purpose each flap (6) comprises, at this flap end face, a lever arm which acts on the flap axis of rotation and can be rotatably connected to a coupling rod (14),
**CHARACTERIZED IN THAT**
THAT each flap of the flap assembly is designed as a locking end on one flap face,
for which at least one spring (16; 18) is provided between a flap (6) and the joining partner,
which is seated with at least one resilient spring tongue (16b, 16c), under deflection by the flaps (6) and against the spring force of the spring tongue, between at least one flap and the joining partner in such a way that, in the event of a flap fracture of at least one flap (6) of the flap arrangement, this spring tongue causes the flap arrangement to be locked.

2. Air guide control of claim 1, **CHARACTERIZED IN THAT** the spring tongue is seated in a spring recess (4d, 4e) for deflectably receiving the spring tongue (16b, 16c; 18b, 18c, 18d) in the mating partner.

3. Air guide control of claim 1 or 2, **CHARACTERIZED IN THAT** the spring (16; 18) comprises an attachment end connectable to the joining partner.

4. Air guide control of claim 1 to 3, **CHARACTERIZED IN THAT** the spring (16; 18) comprises a plurality of separate spring tongues (16b, 16c; 18b, 18c, 18d).

5. Air guide control according to any one of the preceding claims, **CHARACTERIZED IN THAT** at least one spring tongue (16b, 16c; 18b, 18c, 18d) is formed to lock the coupling rod.

6. Air guide control of claim 1 to 5, **CHARACTERIZED IN THAT** the spring effects the locking by engagement of at least one spring tongue (16b, 16c; 18b, 18c, 18d) with a spring recess (4d, 4e).

7. Air guide control of claim 6, **CHARACTERIZED IN THAT** the spring tongue (16b, 16c; 18b, 18c, 18d) of the spring (16; 18) engages a spring recess (14b) on the coupling rod (14).

8. Air guide control according to any one of the preceding claims, **CHARACTERIZED IN THAT** the driving end is formed at a first flap end face and the locking end is formed at the second flap end face opposite to said first flap end face.

9. Air guide control according to any one of the preceding claims, **CHARACTERIZED IN THAT** the flaps (6) of the flap arrangement each comprising at the locking end a flap end disk (6h) extending transversely to the flap axis of rotation, each defining a flap end disk surface and comprising a segmental spring recess (6i) formed to engage the spring tongue (16b, 16c) of the spring (16).

10. Air guide control according to any of the preceding claims, **CHARACTERIZED IN THAT** the joining partner is formed as a circumferentially closed frame (4) in which the flaps of the flap arrangement are rotatably receivable and **in that** the adjustment device is also located inside the frame (4).

11. Air guide control according to any one of the preceding claims, **CHARACTERIZED IN THAT** the spring (16; 18) is formed as a flat or leaf spring extending along a longitudinal spring axis as well as along a transverse spring axis extending transversely to the longitudinal spring axis, and **IN THAT** the leaf spring is formed to be several times longer along the longitudinal spring axis than along the transverse spring axis.

12. Air guide control of claim 11, **CHARACTERIZED IN THAT** the spring (16; 18) has a longitudinal leg (16a; 18a) forming the attachment end and extending along a longitudinal axis of the spring, and THAT at least one resilient spring tongue (16b, 16c; 18b, 18c, 18d) is formed extending transversely of the longitudinal leg (16a; 18a) .

13. Air guide control according to any one of the preceding claims, **CHARACTERIZED IN THAT** flap pivots (6c, 6d) extending along the flap rotation axis are formed on the flap faces.

14. Air guide control according to any one of the preceding claims, **CHARACTERIZED IN THAT** it is formed as part of or insertable into a radiator grille.

15. Radiator grille comprising at least one guide control according to any one of the preceding claims.

## Revendications

1. Dispositif de commande de guidage d'air, susceptible d'être inséré dans un orifice d'air, ou formant ce dernier, pour commander l'air entrant le long d'une direction de circulation d'air (L),
comprenant un ensemble de volets qui comprend plusieurs volets susceptibles d'être insérés dans l'orifice d'air et disposés les uns par rapport aux autres à la manière d'une jalousie,
chaque volet comprenant une surface de volet (6b) carrée ou rectangulaire s'étendant le long d'un axe de rotation de volet (6a) et transversalement à celui-ci, qui est délimitée par des côtés longitudinaux de volet s'étendant parallèlement à l'axe de rotation de volet (6a) et par des côtés frontaux de volet s'étendant transversalement à l'axe de rotation de volet,
les volets (6) de l'ensemble de volets étant susceptibles d'être insérés, chacun de manière mobile, en particulier de manière rotative, dans une pièce d'assemblage correspondante le long de l'axe de rotation de volet sur un premier côté frontal de volet et sur une deuxième extrémité frontale de volet opposée,
chaque volet de l'ensemble de volets étant réglable au moyen d'un dispositif de réglage entre une position d'ouverture, libérant l'orifice d'air, et une position de fermeture, refermant au moins partiellement l'orifice d'air, pour libérer et refermer sélectivement l'orifice d'air afin de réaliser une gestion thermique d'un ensemble de véhicule automobile situé en aval de l'orifice d'air dans la direction de circulation d'air (L),
chaque volet (6) de l'ensemble de volets étant réalisé comme extrémité d'entraînement sur un côté frontal de volet,
chaque volet (6) présentant à cet effet, sur ce côté frontal de volet, un bras de levier qui agit sur l'axe de rotation de volet et qui peut être relié de manière rotative à une barre d'accouplement (14),
**caractérisé en ce que**
chaque volet de l'ensemble de volets est réalisé comme extrémité d'arrêt sur un côté frontal de volet,
ce pourquoi il est prévu, entre un volet (6) et la pièce d'assemblage correspondante, au moins un ressort (16 ; 18) qui repose par au moins une languette de ressort (16b, 16c) entre au moins un volet et la pièce d'assemblage correspondante, en étant dévié par les volets (6) à l'encontre de la force élastique de la languette de ressort, de telle sorte que celle-ci provoque un arrêt de l'ensemble de volets en cas de rupture d'au moins un volet (6) de l'ensemble de volets.

2. Dispositif de commande de guidage d'air selon la revendication 1, **caractérisé en ce que** la languette de ressort repose dans une cavité à ressort (4d, 4e) pour recevoir de manière déviée la languette de ressort (16b, 16c ; 18b, 18c, 18d) dans la pièce d'assemblage correspondante.

3. Dispositif de commande de guidage d'air selon la revendication 1 ou 2, **caractérisé en ce que** le ressort (16 ; 18) présente une extrémité de fixation susceptible d'être reliée à la pièce d'assemblage correspondante.

4. Dispositif de commande de guidage d'air selon les revendications 1 à 3, **caractérisé en ce que** le ressort (16 ; 18) comprend plusieurs languettes de ressort séparées (16b, 16c ; 18b, 18c, 18d).

5. Dispositif de commande de guidage d'air selon l'une des revendications précédentes,
**caractérisé en ce qu'**au moins une languette de ressort (16b, 16c ; 18b, 18c, 18d) est réalisée pour arrêter la barre d'accouplement.

6. Dispositif de commande de guidage d'air selon les revendications 1 à 5, **caractérisé en ce que** le ressort assure l'arrêt par l'engagement d'au moins une languette de ressort (16b, 16c ; 18b, 18c, 18d) dans un évidement à ressort (4d, 4e).

7. Dispositif de commande de guidage d'air selon la revendication 6, **caractérisé en ce que** la languette de ressort (16b, 16c ; 18b, 18c, 18d) du ressort (16 ; 18) s'engage dans un évidement à ressort (14b) sur la barre d'accouplement (14).

8. Dispositif de commande de guidage d'air selon l'une des revendications précédentes,
**caractérisé en ce que** l'extrémité d'entraînement est formée à une première extrémité frontale de volet, et l'extrémité d'arrêt est formée à la deuxième extrémité frontale de volet opposée à cette première extrémité frontale de volet.

9. Dispositif de commande de guidage d'air selon l'une des revendications précédentes,
**caractérisé en ce que** les volets (6) de l'ensemble de volets présentent chacun, à l'extrémité d'arrêt, un disque frontal de volet (6h) s'étendant transversalement à l'axe de rotation de volet, qui définit une surface respective de disque frontal de volet et qui présente un évidement à ressort (6i) en forme de segment conçu pour l'engagement de la languette de ressort (16b, 16c) du ressort (16).

10. Dispositif de commande de guidage d'air selon l'une des revendications précédentes,
**caractérisé en ce que** la pièce d'assemblage correspondante est réalisée sous la forme d'un cadre (4) fermé sur sa périphérie, dans lequel les volets de l'ensemble de volets peuvent être logés de manière rotative, et
**en ce que** le dispositif de réglage est également disposé dans le cadre (4).

11. Dispositif de commande de guidage d'air selon l'une des revendications précédentes,
**caractérisé en ce que** le ressort (16 ; 18) est réalisé sous forme de ressort plat ou de ressort à lame qui s'étend le long d'un axe longitudinal du ressort ainsi que le long d'un axe transversal du ressort s'étendant transversalement à l'axe longitudinal du ressort, et
**en ce que**, le long de l'axe longitudinal du ressort, le ressort à lame est réalisé plusieurs fois plus long que le long de l'axe transversal du ressort.

12. Dispositif de commande de guidage d'air selon la revendication 11,
**caractérisé en ce que** le ressort (16 ; 18) présente une branche longitudinale (16a ; 18a) formant l'extrémité de fixation et s'étendant le long d'un axe longitudinal du ressort, et
**en ce qu'**au moins une languette de ressort (16b, 16c ; 18b, 18c, 18d) élastique est formée de manière à s'étendre transversalement à la branche longitudinale (16a ; 18a).

13. Dispositif de commande de guidage d'air selon l'une des revendications précédentes,
**caractérisé en ce que** des pivots de volet (6c, 6d) s'étendant le long de l'axe de rotation de volet sont formés sur les côtés frontaux de volet.

14. Dispositif de commande de guidage d'air selon l'une des revendications précédentes,
**caractérisé en ce que** celui-ci fait partie d'une grille de radiateur ou est réalisé de manière à pouvoir être inséré dans celle-ci.

15. Grille de radiateur comprenant au moins un dispositif de commande de guidage d'air selon l'une des revendications précédentes.
